# EUROPEAN PATENT APPLICATION

(11) **EP 4 350 042 A2**
(43) Date of publication of application: **10.04.2024**
(21) Application number: 23195194.8
(22) Date of filing: 04.09.2023
(51) Int. Cl.: C25B 1/04, C25B 9/23, C25B 11/02, C25B 11/031, C25B 11/053, C25B 11/081, H01M 4/86

(54) **ELECTRODE FOR ELECTROCHEMICAL REACTION DEVICE, MEMBRANE ELECTRODE ASSEMBLY, AND ELECTROCHEMICAL REACTION DEVICE**

(30) Priority: 03.10.2022 JP 2022159397
(71) Applicant: Kabushiki Kaisha Toshiba, Minato-ku Tokyo (JP); Toshiba Energy Systems & Solutions Corporation, Saiwai-ku Kawasaki-shi Kanagawa (JP)
(72) Inventor: ONO, Akihiko, Tokyo (JP); YOSHINAGA, Norihiro, Tokyo (JP); SUGANO, Yoshitsune, Tokyo (JP)
(74) Representative: Marks & Clerk LLP

(57) **Abstract**

An electrode for an electrochemical reaction device, includes: a substrate; and a stack provided on the substrate. The stack includes catalyst layers and gap layers, and each catalyst layer and each gap layer are alternately stacked. One of the gap layers has a first region and a second region, the first region having a first thickness, the second region having a first gap, and the first gap having a second thickness, and the second thickness is 3 times or more and 10 times or less the first thickness.

## Description

### FIELD

Arrangements relate to an electrode for an electrochemical reaction device, a membrane electrode assembly, and an electrochemical reaction device.

### BACKGROUND

In recent years, the development of electrochemical reaction devices such as a water electrolysis device that converts water into oxygen and hydrogen has been in progress. The water electrolysis device includes, for example, a membrane electrode assembly (MEA) including an anode, a cathode, and an electrolyte membrane. The water electrolysis device oxidizes water by the anode, for example, to produce a hydrogen ion and oxygen, and reduces the hydrogen ion by the cathode to produce hydrogen.

### BRIEF DESCRIPTION OF THE DRAWINGS

FIG. 1 is a schematic cross-sectional view illustrating an example structure of an electrode;
FIG. 2 is a schematic cross-sectional view for explaining an example of a method of forming a stack;
FIG. 3 is a schematic cross-sectional view illustrating another example structure of the electrode; and
FIG. 4 is a schematic view illustrating an example configuration of an electrochemical reaction device.

### DETAILED DESCRIPTION

An electrode for an electrochemical reaction device in an arrangement, includes: a substrate; and a stack provided on the substrate. The stack includes catalyst layers and gap layers, and each catalyst layer and each gap layer are alternately stacked. One of the gap layers has a first region and a second region, the first region having a first thickness, the second region having a first gap, and the first gap having a second thickness, and the second thickness is 3 times or more and 10 times or less the first thickness.

There will be explained arrangements with reference to the drawings below. In each of the following arrangements, substantially the same components are denoted by the same reference numerals and symbols, and explanations thereof may be partly omitted. The drawings are schematic, and a relation between thickness and planar dimension, a thickness ratio among parts, and so on may be different from actual ones.

In this specification, "connecting" includes not only directly connecting but also indirectly connecting, unless otherwise specified.

### (First arrangement)

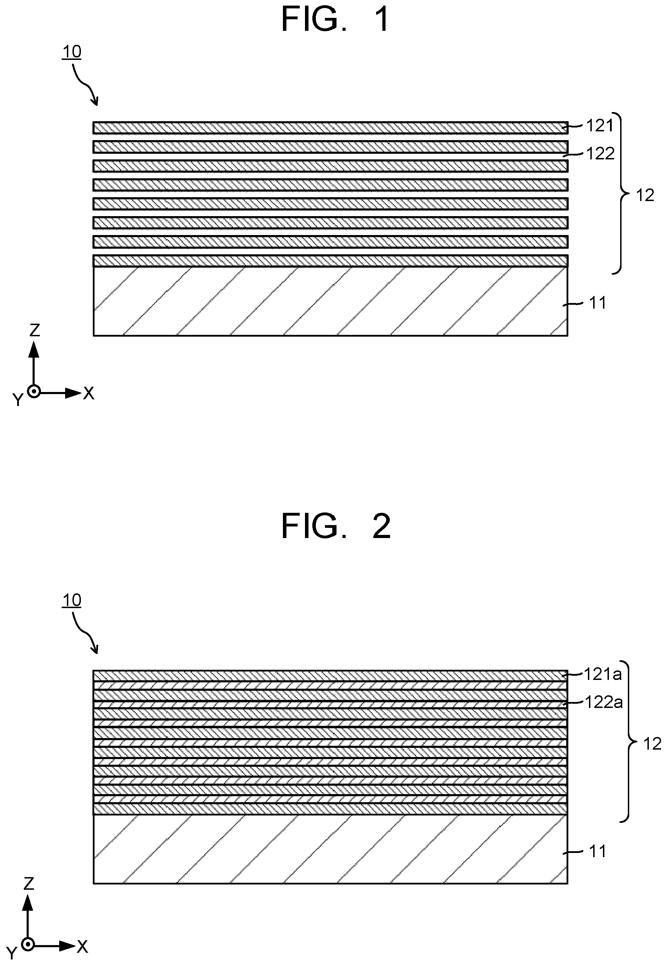

FIG. 1 is a schematic cross-sectional view illustrating an example structure of an electrode. FIG. 1 illustrates an X-axis, a Y-axis orthogonal to the X-axis, and a Z-axis orthogonal to the X-axis and the Y-axis. FIG. 1 also illustrates a part of the X-Z cross section of an electrode 10.

The electrode 10 illustrated in FIG. 1 includes a substrate 11 and a stack 12. The electrode 10 is an electrode for electrochemical reaction device, which is also called an electrochemical reaction device electrode. Examples of the electrode include a cathode of a water electrolysis device. The electrode 10 is not limited the cathode of the water electrolysis device, and the electrode 10 may be an anode of an electrolysis device different from the water electrolysis device.

The substrate 11, for example, can be made using one or more of carbon materials such as carbon cloth and carbon paper, and one or more of metal materials such as titanium (Ti), nickel (Ni), and iron (Fe) and alloys containing at least one of these metals such as SUS. The substrate 11 may be a nonwoven fabric, mesh substrate, or porous substrate with these materials.

The stack 12 is provided on the substrate 11. The stack 12 includes a catalyst layer 121 and a gap layer 122. FIG. 1 illustrates a plurality of the catalyst layers 121 and a plurality of the gap layers 122. Each catalyst layers 121 and each gap layers 122 are alternately stacked on the substrate 11. The catalyst layers 121 may be partially joined together at one or more ends of each of the catalyst layers 121in at least one of the X-axis direction and the Y-axis direction. This can prevent deformation of the stack 12 caused by pressure in the stacking direction. Further, the stack 12 may include at least one catalyst pillar connecting at least two of the catalyst layers 121 in order from a surface of the stack 12. This can prevent peeling of the catalyst layer 121.

The catalyst layer 121 includes an anode catalyst that promotes oxidation of an oxidizable material (a material to be oxidized) or a cathode catalyst that promotes reduction of a reducible material (a material to be reduced). The number of the catalyst layers 121 is not particularly limited, and is, for example, 5 or more and 20 or less. The thickness of the catalyst layer 121 is, for example, 4 nm or more and 50 nm or less.

The anode catalyst, for example, contains at least one noble metal or oxide thereof. The at least one noble metal, for example, includes at least one of platinum (Pt), palladium (Pd), iridium (Ir), ruthenium (Ru), rhodium (Rh), osmium (Os), gold (Au), and tantalum (Ta). The anode catalyst may contain a plurality of these catalyst materials. In the case of a water electrolysis device, the anode catalyst is, for example, a material that promotes an oxidation reaction of water.

The cathode catalyst, for example, contains at least one metal of platinum (Pt), iron (Fe), calcium (Ca), iridium (Ir), and ruthenium (Ru), or at least one oxide thereof.

The gap layer 122 is provided between the catalyst layers 121. The gap layer 122 forms a space. The average thickness of the gap layer 122 is, for example, 1 nm or more and 100 nm or less.

The average thickness of the stack 12 is, for example, 10 nm or more and 900 nm or less. When the thickness is less than 10 nm, the amount of catalyst is small and the reaction efficiency decreases. When the thickness exceeds 900 nm, the diffusibility deteriorates, and the performance of supplying water to the catalyst layer or the performance of discharging an oxygen gas deteriorates, resulting in a decrease in the performance.

The dimensions and composition of the substrate 11, the stack 12, the catalyst layer 121, and the gap layer 122 can be measured using, for example, a scanning electron microscope (SEM), an X-ray fluorescence analysis (XRF), elemental mapping by a transmission electron microscope (TEM), TEM high-angle annular dark-field (HAADF), and an energy dispersive X-ray spectroscopy (EDS) line analysis.

FIG. 2 is a schematic cross-sectional view for explaining an example of a method of forming the stack 12. As illustrated in FIG. 2, the stack 12 can be formed by alternately forming a precursor layer 121a of the catalyst layer 121 and a pore former layer (a pore-forming material layer) 122a using sputtering, and then removing the pore former layers 122a with the precursor layers 121a remaining. This method can control the thicknesses of each of the catalyst layer 121 and the pore former layer 122a on the order of nanometers, and further facilitates control of the composition or the oxidation state, to improve the degree of freedom in the design of the catalyst layer 121.

The precursor layer 121a includes an anode catalyst or a cathode catalyst. When the precursor layer 121a is amorphous, the precursor layer 121a is crystalized by performing a heat treatment to form an oriented crystal structure. When the precursor layer 121a includes a catalyst containing an iridium oxide, the precursor layer 121a may be preferably formed using reactive sputtering in which an oxygen gas is added into a chamber of a sputtering apparatus.

The pore former layer 122a has a pore former. The pore former, for example, contains at least one non-noble metal or oxide thereof. Examples of the non-noble metal include iron (Fe), cobalt (Co), nickel (Ni), manganese (Mn), aluminum (Al), zinc (Zn), tantalum (Ta), tungsten (W), hafnium (Hf), silicon (Si), molybdenum (Mo), titanium (Ti), zirconium (Zr), niobium (Nb), vanadium (V), chromium (Cr), tin (Sn), and strontium (Sr). The pore former layers 122a can be removed by selective etching using chemicals such as acid or alkali, for example, with the catalyst layers 121 remaining. The stack 12 may be heated by a heat treatment to promote melting of the pore former layers 122a.

The pore former may also be included in the precursor layer 121a. The precursor layer 121a containing the pore former can be formed by performing sputtering using a mixed sputtering target containing a raw material of the precursor layer 121a and a raw material of the pore former. This formation method can removes also the pore former in the precursor layer 121a with the pore former in the pore former layer 122a by selective etching to form the porous catalyst layer 121. Therefore, the surface area of the catalyst layer 121 can be increased.

In the case where the electrode 10 illustrated in FIG. 1 is used as an anode of a water electrolysis device, for example, if the thickness of the gap layer 122 (an interval in the thickness direction (Z-axis direction) of the stacks 12) is small, the ability to supply water to the anode may decrease. Further, if the thickness of the gap layer 122 is small, the ability to discharge the oxygen produced by the anode may decrease. These cause a decrease in the cell voltage of the electrochemical reaction device and cause a decrease in the performance of the electrochemical reaction device.

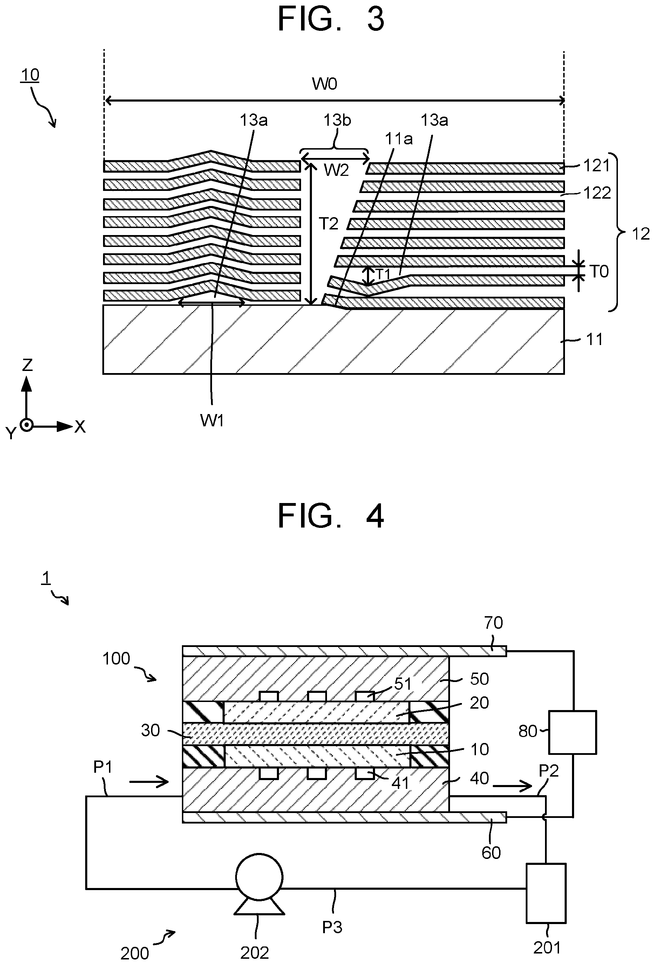

The electrochemical reaction device of the arrangement includes a gap having a thickness greater than the thickness of the gap layer 122 in a part of the stack 12. An example structure of the electrode 10 including the stack 12 having a gap will be explained with reference to FIG. 3. FIG. 3 is a schematic cross-sectional view illustrating another example structure of the electrode 10. Elements different from the electrode 10 illustrated in FIG. 1 will be explained, and the explanation of the electrode 10 illustrated in FIG. 1 can be used as appropriate for the other elements.

The electrode 10 illustrated in FIG. 3 includes the substrate 11 and the stack 12, similarly to the electrode 10 illustrated in FIG. 1.

The surface of the substrate 11 has an uneven surface 11a, which includes regions having different levels. The difference in height of the uneven surface 11a is preferably, for example, 10 nm or more and 100 nm or less. When the difference in height is less than 10 nm, the formation of a gap becomes difficult. When the difference in height exceeds 100 nm, the adhesion between the substrate 11 and the stack 12 may deteriorate. This causes peeling of the catalyst layer 121, which is undesirable. The uneven surface 11a does not necessarily have to be provided.

The stack 12 has a gap 13a and a gap 13b. The presence or absence of each of the gap 13a or the gap 13b is determined, for example, by using a scanning electron microscope (SEM) to observe an X-Z cross section with a length of 2 µm in the X-axis direction of electrode 10 at ten different locations. The stack 12 only needs to have at least one of the gaps 13a and the gaps 13b in at least one of the ten observation images.

The gap 13a may extend to the side of the stack 12, for example. The gap 13a defines a space. The gap 13a has a thickness T1 that is greater than a thickness T0 of the gap layer 122. The thickness T0 corresponds to the average thickness of a region (first region) of all the gap layers 122 excluding the gaps 13a and 13b. The thickness T0 is, for example, 1 nm or more and 50 nm or less, and preferably 1 nm or more and 10 nm or less.

The thickness T1 is preferably 3 times or more and 10 times or less the thickness T0. When the thickness T1 is less than 3 times the thickness T0, it is difficult to sufficiently improve the ability to supply water and the ability to discharge oxygen described above. When the thickness T1 exceeds 10 times the thickness T0, the adhesion may deteriorate. This causes peeling of the catalyst layer 121, which is undesirable. Further, since the thickness of the catalyst layer 121 increases, the conductivity in the thickness direction or the diffusivity decreases, causing a decrease in the performance of the electrochemical reaction device. The thickness T1 is, for example, 10 nm or more and 50 nm or less. When the thickness T1 is less than 10 nm, the gap 13a is narrow, and thus the ability to supply water and the performance of discharging oxygen decrease, and the reaction efficiency decreases. When the thickness T1 exceeds 50 nm, the adhesion of the catalyst layer 121 may deteriorate. This causes peeling of the catalyst layer 121, which is undesirable. Further, since the thickness of the stack 12 increases, the conductivity in the thickness direction or the diffusivity of water or oxygen decreases, causing a decrease in the performance of the electrochemical reaction device.

A width W1 of the gap 13a is defined by the length of a region (second region) of the gap 13a in which the thickness T1 is 3 times or more and 10 times or less the thickness T0 in the X-Z cross section. The width W1 of the gap 13a is preferably 1/500 times (0.002 times) or more and 1/10 times (0.1 times) or less a width W0 of the gap layer 122. In other words, the gap 13a preferably includes a region having a length of 1/500 times (0.002 times) or more and 1/10 times (0.1 times) or less the width W0 of the gap layer 122, the region having the thickness T1. The width W0 is defined by the average length of the portion of all the gap layers 122 excluding the gaps 13a and 13b in the X-Z cross section. The width W0 is, for example, 1 µm or more and 30 µm or less, and further 5 µm or more and 10 µm or less.

A plurality of the gaps 13a may be provided as illustrated in FIG. 3. The gap 13a may be provided between the substrate 11 and the catalyst layer 121 and between a plurality of the catalyst layers 121, as illustrated in FIG. 3. This arrangement is not limited to this, as long as at least one gap 13a is provided.

The gap 13b penetrates at least two of the catalyst layers 121 along a direction intersecting with the surface of the substrate 11. The gap 13b preferably penetrates at least three or more catalyst layers 121. FIG. 3 illustrates the gap 13b that penetrates all the catalyst layers 121 and is exposed to the upper surface of the stack 12 in the Z-axis direction. The gap 13b may communicate with the gap 13a. The gap 13b may extend in the Y-axis direction.

The gap 13b defines a space. Examples of the gap 13b include a crack. A width W2 of the gap 13b is defined by the maximum width of the gap 13b in the direction vertical to the thickness direction of the stack 12. The width W2 of the gap 13b is preferably 25 nm or more and 900 nm or less, for example. When the width W2 is less than 25 nm, the formation of a gap becomes difficult. Further, no improvement in the performance of supplying water is expected and the performance of discharging oxygen is the same as usual, thus not contributing to the improvement in reaction efficiency. When the width W2 exceeds 900 nm, the adhesion may deteriorate. This causes peeling of the catalyst layer 121, which is undesirable. Further, since the thickness of the stack 12 increases, the conductivity in the thickness direction decreases, causing a decrease in the performance of the electrochemical reaction device. The gap 13b may have a circular shape or a polygonal shape when viewed from the Z-axis direction.

The thickness T2 of the gap 13b is defined by the maximum length of the gap 13b in the thickness direction of the stack 12. The thickness T2 of the gap 13b is preferably, for example, equal to or more than 1/3 of the thickness of the stack 12 and equal to or less than the thickness of the stack 12. This can improve the ability to supply water and the ability to discharge oxygen, for example.

The gap 13b is likely to be provided on the uneven surface 11a. This is because the stack 12 is easily deformed on the uneven surface 11a in the process of forming the stack 12. This arrangement is not limited to this, and the gap 13b may be provided in a region different from the uneven surface 11a. Further, a plurality of the gaps 13b may be formed.

The thickness T0, the width W0, the thickness T1, the width W1, the thickness T2, and the width W2 can be measured using, for example, a SEM, XRF, HAADF, or EDS line analysis.

The gap 13a or the gap 13b is likely to be formed by the deformation of the stack 12 caused by removing the pore former layers 122a illustrated in FIG. 2. Therefore, the presence or absence, the size, and the number of gaps 13a and 13b can be adjusted, for example, by adjusting the conditions for forming the stack 12. For example, the presence or absence, the size, and the number of gaps 13a and 13b can be adjusted according to the conditions of the heat treatment temperature when forming the catalyst layer 121.

The formation of the gap 13a and the gap 13b can also be controlled by introducing oxygen in the atmosphere during sputtering for forming the pore former layer 122a. When the oxygen concentration is 30 mass% or more and less than 60 mass%, the gap 13a or the gap 13b is likely to be formed. When the oxygen concentration is 60 mass% or more and 90 mass% or less, the gap 13a or the gap 13b is more likely to be formed. When the oxygen concentration is 0 mass% or more and less than 30 mass%, the gap 13a or the gap 13b is less likely to be formed.

Further, the formation of the gap 13a and the gap 13b can also be controlled by the oxidation number of the anode catalyst to be used during sputtering for forming the catalyst layer 121. For example, when only the noble metal elements having a valence of 4 or more are detected by an X-ray absorption fine structure analysis (XAFS) or X-ray photoelectron spectroscopy (XPS), the gap 13a or the gap 13b is less likely to be formed. Further, when a catalyst element having a valence of 2 or more and 3 or less is contained, the gap 13a or the gap 13b is likely to be formed.

As above, the electrode arrangement includes the stack 12 having either the gap 13a or the gap 13b to facilitate movement of liquids such as water or gases such as oxygen through the gap 13a or the gap 13b and thus improve the ability to supply liquid and the ability to discharge gas.

### (Second arrangement)

In this arrangement, there are explained examples of a membrane electrode assembly and an electrochemical reaction device including the electrode 10 in the first arrangement. FIG. 4 is a schematic view illustrating an example configuration of an electrochemical reaction device. An electrochemical reaction device 1 illustrated in FIG. 4 includes a membrane electrode assembly 100 and an anode solution supply system 200.

The membrane electrode assembly 100 includes an electrode 10, an electrode 20, and an electrolyte membrane 30.

The electrode 10 has a function as an anode. The electrode 10 can be formed by applying the structure of the electrode 10 illustrated in FIG. 3, for example. The catalyst layer 121 of the electrode 10 includes an anode catalyst.

The substrate 11 of the electrode 10 faces on an anode flow path 41 through which an anode solution flows. The stack 12 of the electrode 10 faces on the electrolyte membrane 30. The anode flow path 41 has grooves provided on the surface of an anode flow path plate 40. The anode flow path 41 has an inlet and an outlet, which are not illustrated. The inlet of the anode flow path 41 is connected to an anode supply flow path P1. The outlet of the anode flow path 41 is connected to an anode discharge flow path P2. The shape of the anode flow path 41 is not limited in particular, and may have a serpentine shape along the surface of the anode flow path plate 40, for example.

The electrode 20 has a function as a cathode. The electrode 20 includes a cathode catalyst. The explanation of the cathode catalyst of this arrangement can substitute the explanation of the cathode catalyst in the first arrangement as appropriate. The cathode catalyst is formed as a cathode catalyst layer on a substrate, for example. The substrate can be formed using a material applicable to the substrate 11 of the electrode 10. A particulate cathode catalyst may be mixed with a binder made of a proton-conducting organic material to form the cathode catalyst layer. Examples of the binder include polyvinyl alcohol (PVA).

The substrate of the electrode 20 faces on a cathode flow path 51. The cathode catalyst layer of the electrode 20 faces on the electrolyte membrane 30. The cathode flow path 51 has grooves provided on the surface of a cathode flow path plate 50. The cathode flow path 51 has an outlet, which is not illustrated. For example, the outlet of the cathode flow path 51 is connected to a product collector, which is not illustrated. The shape of the cathode flow path 51 is not limited in particular, and may have a serpentine shape along the surface of the cathode flow path 51, for example.

The electrolyte membrane 30 is provided between the electrode 10 and the electrode 20. The electrolyte membrane 30 can be made of a membrane such as an ion exchange membrane that allows ions to move between the electrode 10 and the electrode 20, for example. Examples of the ion exchange membrane include a cation exchange membrane such as Nafion or Flemion. The electrolyte membrane 30 may be impregnated with part of the catalyst layers of the electrode 10 and the electrode 20. This impregnation can increase the adhesion between the electrode 10 and the electrolyte membrane 30 and the adhesion between the electrode 20 and the electrolyte membrane 30.

The electrode 10 and the electrode 20 are electrically connected to an anode current collector 60 and a cathode current collector 70, respectively. Each of the anode current collector 60 and the cathode current collector 70 is electrically connected to a power supply 80 via a current introduction member such as wirings. The power supply 80 is not limited to a power source such as a normal system power supply or a battery, and may have a power source that supplies power generated by renewable energy such as photovoltaics or wind power generation. The power supply 80 may include the power source and a power controller that adjusts the output of the power source to control the voltage between the electrode 10 and the electrode 20.

The electrode 10, the electrode 20, the electrolyte membrane 30, the anode flow path plate 40, the cathode flow path plate 50, the anode current collector 60, and the cathode current collector 70 may be stacked to each other, This stack is also called an electrolysis cell. The stack may be provided between supporting plates, which are not illustrated, and further tightened with bolts or the like.

The anode solution supply system 200 includes an anode solution container 201, a flow rate controller 202, and a circulation flow path P3, and is configured so that the anode solution circulates through the anode flow path 41. The anode solution supply system 200 connects the anode supply flow path P1 and the anode discharge flow path P2 via the circulation flow path P3. The electrochemical reaction device 1 may have at least one selected from a valve or a pump in the middle of the anode supply flow path P1, in the middle of the anode discharge flow path P2, and/or in the middle of the circulation flow path P3 to control the pressure of each flow path or the flow rate of a fluid flowing through the corresponding flow path.

The anode solution container 201 includes a tank that stores a fluid containing the anode solution to be discharged from the outlet of the anode flow path 41 through the anode discharge flow path P2 (also referred to as an anode discharge liquid). The flow rate controller 202 is provided in the middle of at least one of the anode supply flow path P1, the anode discharge flow path P2, and the circulation flow path P3, and can control the flow rate of the anode solution. The anode solution is introduced to the anode flow path 41 through the anode supply flow path P1. The electrochemical reaction device 1 may have a pressure controller provided in the middle of at least one of the anode supply flow path P1, the anode discharge flow path P2, and the circulation flow path P3 to control the pressure of the anode flow path 41. The anode solution container 201 may be connected to an anode solution supply source, which is not illustrated, and the anode solution container 201 may be replenished with the anode solution from the anode solution supply source.

The anode solution is preferably a solution containing at least water (H₂O). The anode solution may contains, for example, ultrapure water. The anode solution may contain nickel ions.

Next, there is explained a method of controlling the electrochemical reaction device. When performing electrolysis using the electrochemical reaction device, an anode solution is supplied to the anode flow path 41, and the power supply 80 applies a voltage between the electrode 10 and the electrode 20 to supply current. The anode solution is supplied to the gap layer 122, the gap 13a, or the gap 13b of the electrode 10. When a current is applied between the electrode 10 and the electrode 20, an oxidation reaction near the electrode 10 and a reduction reaction near the electrode 20 occur as described below. The case where water is oxidized to produce a hydrogen ion and the hydrogen ion is reduced to produce hydrogen is explained here, but other side reactions may also occur.

First, there is explained a reaction process in the case where water (H₂O) is oxidized to produce a hydrogen ion (H⁺). When the power supply 80 supplies a current between the electrode 10 and the electrode 20, an oxidation reaction of water (H₂O) occurs at the electrode 10 in contact with the anode solution. Specifically, as expressed in Expression (1) below, H₂O contained in the anode solution is oxidized to produce oxygen (O₂), a hydrogen ion (H⁺), and an electron (e⁻). The oxygen produced at the electrode 10 is discharged to the outside of the electrode 10 through the gap layer 122, the gap 13a, or the gap 13b. The discharged oxygen may be collected by an anode product collector, which is not illustrated.

2H₂O → 4H⁺ + O₂ + 4e⁻ ... (1)

H⁺ produced at the electrode 10 moves through the anode solution present in the electrode 10 and the electrolyte membrane 30 and reaches the vicinity of the electrode 20. The electron (e⁻) based on the current supplied from the power supply 80 to the electrode 20 and H⁺ that has moved to the vicinity of the electrode 20 cause a reduction reaction of the hydrogen ion. Specifically, as expressed in Expression (2) below, the hydrogen ion is reduced to produce hydrogen. The hydrogen produced at the electrode 20 is discharged from the outlet of the cathode flow path 51. The discharged hydrogen may be collected by a cathode product collector, which is not illustrated.

4H⁺ + 4e⁻ → 2H₂ ... (2)

The above is the explanation of the method of controlling the electrochemical reaction device. The electrochemical reaction device in this arrangement includes the stack 12 having either the gap 13a or the gap 13b in the first arrangement in the electrode 10, to move the anode solution and oxygen through the gap 13a or the gap 13b, and thus improve the ability to supply the water of the anode solution, and the ability to discharge the oxygen of the oxidation product.

### Examples

### (Example 1)

A water electrolysis device having the configuration illustrated in FIG. 4 was manufactured. As for the electrode 10, the catalyst layer 121 and the gap layer 122 were formed by alternately sputtering Ir and nickel on a titanium nonwoven fabric and etching the nickel with acid. The thickness of the catalyst layer 121 was 30 nm. The thickness of the stack 12 was 350 nm. The number of layers of the catalyst layer 121 was 10. The electrode 20 was formed by applying a carbon-supported platinum catalyst to a gas diffusion layer. The electrolyte membrane 30 was Nafion. The anode flow path plate 40 and the cathode flow path plate 50 were formed by cutting titanium. The anode current collector 60 and the cathode current collector 70 were formed by plating a titanium plate with gold. These members were stacked, sandwiched between support plates, which are not illustrated, and further tightened with bolts. Observation of the cross section of the electrode 10 at the 10 locations using an SEM revealed that the electrode 10 had gaps 13a between the catalyst layers 121 of the stack 12. The size of any one gap 13a was measured. The thickness T0 of the gap layer 122 was 5 nm. The width W0 of the gap layer 122 was 15 µm. The thickness T1 of the gap 13a was 30 nm. The width W1 of the gap 13a was 150 nm.

In the electrolysis device in Example 1, the temperature of the electrolysis cell was set to 80°C, and an electrolysis operation was continuously performed at a current density of 2 A/cm² while supplying water to the anode. The voltage between the electrode 10 and the electrode 20 (the voltage across the electrolysis cell) was measured 48 hours after the start of the electrolysis operation, and then the voltage was 1.782 V The result is illustrated in Table 1.

### (Example 2)

A water electrolysis device was manufactured in the same manner as in Example 1, except that the conditions for forming the electrode 10 were different from those in Example 1. As for the electrode 10, the catalyst layer 121 and the gap layer 122 were formed by alternately sputtering Ir and nickel on a titanium nonwoven fabric and etching the nickel with acid. Observation of the cross section of the electrode 10 using an SEM revealed that the electrode 10 had gaps 13a between the catalyst layers 121 of the stack 12. The size of any one gap 13a was measured. The thickness T0 of the gap layer 122 was 5 nm. The width W0 of the gap layer 122 was 15 µm. The thickness T1 of the gap 13a was 45 nm. The width W1 of the gap 13a was 150 nm.

In the electrolysis device in Example 2, an electrolysis operation was performed under the same conditions as in Example 1. Further, the voltage across the electrolysis cell was measured by the same method as in Example 1, and then the voltage was 1.788 V The result is illustrated in Table 1.

### (Example 3)

A water electrolysis device was manufactured in the same manner as in Example 1, except that the conditions for forming the electrode 10 were different from those in Example 1. As for the electrode 10, the catalyst layer 121 and the gap layer 122 were formed by sputtering iridium and nickel alternately on a titanium nonwoven fabric and etching the nickel with acid. Observation of the cross section of the electrode 10 using an SEM revealed that the electrode 10 had gaps 13a between the catalyst layers 121 of the stack 12. The size of any one gap 13a was measured. The thickness T0 of the gap layer 122 was 5 nm. The width W0 of the gap layer 122 was 15 µm. The thickness T1 of the gap 13a was 17 nm. The width W1 of the gap 13a was 150 nm.

In the electrolysis device in Example 3, an electrolysis operation was performed under the same conditions as in Example 1. Further, the voltage across the electrolysis cell was measured by the same method as in Example 1, and then the voltage was 1.802 V The result is illustrated in Table 1.

### (Example 4)

A water electrolysis device was manufactured in the same manner as in Example 1, except that the conditions for forming the electrode 10 were different from those in Example 1. As for the electrode 10, the catalyst layer 121 and the gap layer 122 were formed by sputtering iridium and nickel alternately on a titanium nonwoven fabric and etching the nickel with acid. Observation of the cross section of the electrode 10 using an SEM revealed that the electrode 10 had gaps 13a between the catalyst layers 121 of the stack 12. The size of any one gap 13a was measured. The thickness T0 of the gap layer 122 was 5 nm. The width W0 of the gap layer 122 was 15 µm. The thickness T1 of the gap 13a was 15 nm or more. The width W1 of the gap 13a was 1500 nm. This was the length of 1/10 times the length of the width W0 of the gap layer 122.

In the electrolysis device in Example 4, an electrolysis operation was performed under the same conditions as in Example 1. Further, the voltage across the electrolysis cell was measured by the same method as in Example 1, and then the voltage was 1.850 V The result is illustrated in Table 1.

### (Example 5)

A water electrolysis device was manufactured in the same manner as in Example 1, except that the conditions for forming the electrode 10 were different from those in Example 1. As for the electrode 10, the catalyst layer 121 and the gap layer 122 were formed by sputtering iridium and nickel alternately on a titanium nonwoven fabric and etching the nickel with acid. Observation of the cross section of the electrode 10 using an SEM revealed that the electrode 10 had gaps 13a between the catalyst layers 121 of the stack 12. The size of any one gap 13a was measured. The thickness T0 of the gap layer 122 was 5 nm. The width W0 of the gap layer 122 was 15 µm. The thickness T1 of the gap 13a was 15 nm or more. The width W1 of the gap 13a was 30 nm. This was the length of 1/500 times or less the width W0 of the gap layer 122.

In the electrolysis device in Example 5, an electrolysis operation was performed under the same conditions as in Example 1. Further, the voltage across the electrolysis cell was measured by the same method as in Example 1, and then the voltage was 1.825 V The result is illustrated in Table 1.

### (Example 6)

A water electrolysis device was manufactured in the same manner as in Example 1, except that the conditions for forming the electrode 10 were different from those in Example 1. As for the electrode 10, the catalyst layer 121 and the gap layer 122 were formed by sputtering iridium and nickel alternately on a titanium nonwoven fabric and etching the nickel with acid. Observation of the cross section of the electrode 10 using an SEM revealed that the electrode 10 had gaps 13a between the catalyst layers 121 of the stack 12. The size of any one gap 13a was measured. The thickness T0 of the gap layer 122 was 5 nm. The width W0 of the gap layer 122 was 15 µm. The thickness T1 of the gap 13a was 15 nm or more. The width W1 of the gap 13a was 150 nm. This was the length of 1/100 times the length of the width W0 of the gap layer 122.

In the electrolysis device in Example 6, an electrolysis operation was performed under the same conditions as in Example 1. Further, the voltage across the electrolysis cell was measured by the same method as in Example 1, and then the voltage was 1.790 V The result is illustrated in Table 1.

### (Example 7)

A water electrolysis device was manufactured in the same manner as in Example 1, except that the conditions for forming the electrode 10 were different from those in Example 1. As for the electrode 10, the catalyst layer 121 and the gap layer 122 were formed by sputtering iridium and nickel alternately on a titanium nonwoven fabric and etching the nickel with acid. Observation of the cross section of the electrode 10 using an SEM revealed that the electrode 10 had gaps 13b penetrating a plurality of the catalyst layers 121 of the stack 12. The size of any one gap 13b was measured. The thickness T0 of the gap layer 122 was 5 nm. The width W0 of the gap layer 122 was 15 µm. The thickness T2 of the gap 13b was 350 nm. This was the same as the thickness of the stack 12. The width W2 of the gap 13b was 200 nm.

In the electrolysis device in Example 7, an electrolysis operation was performed under the same conditions as in Example 1. Further, the voltage across the electrolysis cell was measured by the same method as in Example 1, and then the voltage was 1.783 V The result is illustrated in Table 1.

### (Example 8)

A water electrolysis device was manufactured in the same manner as in Example 1, except that the conditions for forming the electrode 10 were different from those in Example 1. As for the electrode 10, the catalyst layer 121 and the gap layer 122 were formed by sputtering iridium and nickel alternately on a titanium nonwoven fabric and etching the nickel with acid. Observation of the cross section of the electrode 10 using an SEM revealed that the electrode 10 had gaps 13b penetrating a plurality of the catalyst layers 121 of the stack 12. The size of any one gap 13b was measured. The thickness T0 of the gap layer 122 was 5 nm. The width W0 of the gap layer 122 was 7 µm. The thickness T2 of the gap 13b was about 117 nm. This was the same as 1/3 the thickness of the thickness of the stack 12. The width W2 of the gap 13b was 60 nm.

In the electrolysis device in Example 8, an electrolysis operation was performed under the same conditions as in Example 1. Further, the voltage across the electrolysis cell was measured by the same method as in Example 1, and then the voltage was 1.804 V The result is illustrated in Table 1.

### (Example 9)

A water electrolysis device was manufactured in the same manner as in Example 1, except that the conditions for forming the electrode 10 were different from those in Example 1. As for the electrode 10, the catalyst layer 121 and the gap layer 122 were formed by sputtering iridium and nickel alternately on a titanium nonwoven fabric and etching the nickel with acid. Observation of the cross section of the electrode 10 using an SEM revealed that the electrode 10 had gaps 13b penetrating a plurality of the catalyst layers 121 of the stack 12. The size of any one gap 13b was measured. The thickness T0 of the gap layer 122 was 5 nm. The width W0 of the gap layer 122 was 7 µm. The thickness T2 of the gap 13b was 105 nm. The width W2 of the gap 13b was 30 nm.

In the electrolysis device in Example 9, an electrolysis operation was performed under the same conditions as in Example 1. Further, the voltage across the electrolysis cell was measured by the same method as in Example 1, and then the voltage was 1.850 V The result is illustrated in Table 1.

### (Example 10)

A water electrolysis device was manufactured in the same manner as in Example 1, except that the conditions for forming the electrode 10 were different from those in Example 1. As for the electrode 10, the catalyst layer 121 and the gap layer 122 were formed by sputtering iridium and nickel alternately on a titanium nonwoven fabric and etching the nickel with acid. Observation of the cross section of the electrode 10 using an SEM revealed that the electrode 10 had gaps 13b penetrating a plurality of the catalyst layers 121 of the stack 12. The size of any one gap 13b was measured. The thickness T0 of the gap layer 122 was 5 nm. The width W0 of the gap layer 122 was 7 µm. The thickness T2 of the gap 13b was 300 nm. The width W2 of the gap 13b was 200 nm.

In the electrolysis device in Example 10, an electrolysis operation was performed under the same conditions as in Example 1. Further, the voltage across the electrolysis cell was measured by the same method as in Example 1, and then the voltage was 1.821 V The result is illustrated in Table 1.

### (Example 11)

A water electrolysis device was manufactured in the same manner as in Example 1, except that the conditions for forming the electrode 10 were different from those in Example 1. As for the electrode 10, the catalyst layer 121 and the gap layer 122 were formed by sputtering iridium and nickel alternately on a titanium nonwoven fabric and etching the nickel with acid. Observation of the cross section of the electrode 10 using an SEM revealed that the electrode 10 had gaps 13a between the catalyst layers 121 of the stack 12 and gaps 13b penetrating a plurality of the catalyst layers 121 of the stack 12. The sizes of any one gap 13a and any one gap 13b were measured. The thickness T0 of the gap layer 122 was 5 nm. The width W0 of the gap layer 122 was 7 µm. The thickness T1 of the gap 13a was 30 nm. The width W1 of the gap 13a was 150 nm. The thickness T2 of the gap 13b was 350 nm. The width W2 of the gap 13b was 150 nm.

In the electrolysis device in Example 11, an electrolysis operation was performed under the same conditions as in Example 1. Further, the voltage across the electrolysis cell was measured by the same method as in Example 1, and then the voltage was 1.821 V The result is illustrated in Table 1.

### (Example 12)

A water electrolysis device was manufactured in the same manner as in Example 11, except that the conditions for forming the electrode 10 were different from those in Example 11. As for the electrode 10, the catalyst layer 121 and the gap layer 122 were formed by sputtering iridium and nickel alternately on a titanium nonwoven fabric and etching the nickel with acid. Observation of the cross section of the electrode 10 using an SEM revealed that the electrode 10 had gaps 13a between the catalyst layers 121 of the stack 12 and gaps 13b penetrating a plurality of the catalyst layers 121 of the stack 12. The sizes of any one gap 13a and any one gap 13b were measured. The thickness T0 of the gap layer 122 was 5 nm. The width W0 of the gap layer 122 was 7 µm. The thickness T1 of the gap 13a was 30 nm. The width W1 of the gap 13a was 150 nm. The thickness T2 of the gap 13b was 230 nm. The width W2 of the gap 13b was 150 nm.

In the electrolysis device in Example 12, an electrolysis operation was performed under the same conditions as in Example 1. Further, the voltage across the electrolysis cell was measured by the same method as in Example 1, and then the voltage was 1.785 V The result is illustrated in Table 1.

### (Comparative example 1)

A water electrolysis device was manufactured in the same manner as in Example 1, except that the conditions for forming the electrode 10 were different from those in Example 1. As for the electrode 10, the catalyst layer 121 and the gap layer 122 were formed by sputtering iridium and nickel alternately on a titanium nonwoven fabric and etching the nickel with acid. Observation of the cross section of the electrode 10 using an SEM revealed that the electrode 10 did not have the gaps 13a or the gaps 13b. The thickness T0 of the gap layer 122 was 5 nm. The width W0 of the gap layer 122 was 15 µm.

In the electrolysis device in Comparative example 1, an electrolysis operation was performed under the same conditions as in Example 1. Further, the voltage across the electrolysis cell was measured by the same method as in Example 1, and then the voltage was 1.910 V The result is illustrated in Table 1.

### (Comparative example 2)

A water electrolysis device was manufactured in the same manner as in Example 11, except that the conditions for forming the electrode 10 were different from those in Example 11. As for the electrode 10, the catalyst layer 121 and the gap layer 122 were formed by sputtering iridium and nickel alternately on a titanium nonwoven fabric and etching the nickel with acid. In the formation of the electrode 10, the oxygen concentration during sputtering was set to be lower than that in Example 1. Observation of the cross section of the electrode 10 using an SEM revealed that the electrode 10 had gaps 13a between the catalyst layers 121 of the stack 12. The size of any one gap 13a was measured. The thickness T0 of the gap layer 122 was 5 nm. The width W0 of the gap layer 122 was 15 µm. The thickness T1 of the gap 13a was 7 nm. The width W1 of the gap 13a was 20 nm.

In the electrolysis device in Comparative example 2, an electrolysis operation was performed under the same conditions as in Example 1. Further, the voltage across the electrolysis cell was measured by the same method as in Example 1, and then the voltage was 1.905 V The result is illustrated in Table 1.

**[Table 1]**

| | Void layer 122 | | Gap 13a | | | Gap 13b | | | Cell voltage |
|---|---|---|---|---|---|---|---|---|---|
| | Thickness T0 | Width W0 | Presence or absence | Thickness T1 | Width W1 | Presence or absence | Thickness T2 | Width W2 | |
| Example 1 | 5nm | 15µm | Present | 30nm | 150nm | Absent | - | - | 1.782V |
| Example 2 | 5nm | 15µm | Present | 45nm | 150nm | Absent | - | - | 1.788V |
| Example 3 | 5nm | 15µm | Present | 17nm | 150nm | Absent | - | - | 1.802V |
| Example 4 | 5nm | 15µm | Present | 15nm | 1500nm | Absent | - | - | 1.850V |
| Example 5 | 5nm | 15µm | Present | 15nm | 30nm | Absent | - | - | 1.825V |
| Example 6 | 5nm | 15µm | Present | 15nm | 150nm | Absent | - | - | 1.790V |
| Example 7 | 5nm | 15µm | Absent | - | - | Present | 350nm | 200nm | 1.783V |
| Example 8 | 5nm | 7µm | Absent | - | - | Present | About 117 nm | 60nm | 1.804V |
| Example 9 | 5nm | 7µm | Absent | - | - | Present | 105nm | 30nm | 1.850V |
| Example 10 | 5nm | 7µm | Absent | - | - | Present | 300nm | 200nm | 1.821V |
| Example 11 | 5nm | 7µm | Present | 30nm | 150nm | Present | 350nm | 150nm | 1.782V |
| Example 12 | 5nm | 7µm | Present | 30nm | 150nm | Present | 230nm | 150nm | 1.785V |
| Comparative example 1 | 5nm | 15µm | Absent | - | - | Absent | - | - | 1.910V |
| Comparative example 2 | 5nm | 15µm | Present | 7nm | 20nm | Absent | - | - | 1.905V |

The results of Examples 1 to 12 and Comparative examples 1 and 2 reveal that forming at least one of the gap 13a and the gap 13b in the stack 12 and controlling its shape or size can inhibit the increase in cell voltage. This can inhibit the deterioration of the cell performance. The presence of the gap improves the diffusibility of water or oxygen, the oxygen gas generated on the surface of the catalyst is efficiently discharged from the surface of the catalyst, water can easily enter a clearance between cracks, the contact area between the catalyst and water increases, the executed reaction area increases, and thereby, the reaction efficiency can be improved. The voltage across the electrolysis cell is preferably, for example, 1.23 V or more and 1.85 V or less, and more preferably 1.23 V or more and 1.78 V or less.

The configurations of the arrangements can be employed in combination or can be partly replaced. While certain arrangements of the present invention have been described, these arrangements have been presented by way of example only, and are not intended to limit the scope of the inventions. Indeed, the novel arrangements described herein may be embodied in a variety of other forms; furthermore, various omissions, substitutions and changes in the form of the arrangements described herein may be made without departing from the spirit of the inventions. The accompanying claims and their equivalents are intended to cover such forms or modifications as would fall within the scope and spirit of the inventions.

The arrangements can be summarized into the following clauses.

### (Clause 1)

An electrode for electrochemical reaction device comprising:
a substrate; and
a stack provided on the substrate, wherein
the stack includes catalyst layers and gap layers, and each catalyst layer and each gap layer are alternately stacked,
one of the gap layers has a first region and a second region, the first region having a first thickness, the second region having a first gap, and the first gap having a second thickness, and
the second thickness is 3 times or more and 10 times or less the first thickness.

### (Clause 2)

The electrode according to the clause 1, wherein
the first thickness is 1 nm or more and 50 nm or less.

### (Clause 3)

The electrode according to the clause 1 or the clause 2, wherein
a width of the first gap is 1/500 times or more and 1/10 times or less a width of the first region.

### (Clause 4)

The electrode according to any one of the clause 1 to the clause 3, wherein
the stack further includes a second gap penetrating at least two of the catalyst layers in order from the surface of the stack and communicating with the first gap.

### (Clause 5)

The electrode according to the clause 4, wherein
a thickness of the second gap is equal to or more than 1/3 of a thickness of the stack and equal to or less than the thickness of the stack.

### (Clause 6)

The electrode according to the clause 4 or the clause 5, wherein
a width of the second gap is 25 nm or more and 900 nm or less.

### (Clause 7)

The electrode according to any one of the clause 4 to the clause 6, wherein
the surface of the substrate has an uneven surface,
a difference in height of the uneven surface is 10 nm or more and 100 nm or less, and
the second gap is provided on the uneven surface.

### (Clause 8)

The electrode according to any one of clause 1 to clause 7, wherein
each catalyst layer contains at least one metal selected from the group consisting of platinum, palladium, iridium, ruthenium, rhodium, osmium, gold, and tantalum.

### (Clause 9)

The electrode according to any one of clause 1 to clause 7, wherein
each catalyst layer contains iridium.

### (Clause 10)

The electrode according to any one of clause 1 to clause 9, wherein
each catalyst layer is porous.

### (Clause 11)

The electrode according to any one of clause 1 to clause 10, wherein
the stack has a first average thickness of 10 nm or more and 900 nm or less.

### (Clause 12)

The electrode according to any one of clause 1 to clause 11, wherein
each gap layer has a second average thickness of 1 nm or more and 100 nm or less.

### (Clause 13)

The electrode according to any one of clause 1 to clause 12, wherein
the second gap includes a crack.

### (Clause 14)

A membrane electrode assembly comprising:
a first electrode including the electrode according to any one of clause 1 to clause 13;
a second electrode; and
an electrolyte membrane provided between the first electrode and the second electrode.

### (Clause 15)

An electrochemical reaction device comprising the membrane electrode assembly according to clause 14.

### (Clause 16)

The device according to clause 15, further comprising:
an anode flow path plate having an anode flow path through which an anode solution containing water flows, the anode flow path facing on the first electrode;
a cathode flow path plate having a cathode flow path facing on the second electrode;
an anode supply flow path connected to an inlet of the anode flow path;
an anode discharge flow path connected to an outlet of the anode flow path; and
a circulation flow path connecting the anode supply flow path and the anode discharge flow path.

### (Clause 17)

The device according to clause 16, wherein
the first electrode, the second electrode, the electrolyte membrane, the anode flow path plate, the cathode flow path plate are stacked to form at least one electrolysis cell.

### (Clause 18)

The device according to clause 16 or clause 17, further comprising
a power supply configured to supply a voltage between the first electrode and the second electrode, the voltage being 1.23 V or more and 1.85 V or less.

### (Clause 19)

The device according to any one of clause 16 to clause 18, further comprising
a tank configured to store the anode solution discharged from the anode flow path through the anode discharge flow path, the anode solution containing nickel.

### (Clause 20)

The device according to any one of clause 16 to clause 19, wherein
the second electrode contains platinum.

## Claims

1. An electrode for an electrochemical reaction device comprising:
a substrate; and
a stack provided on the substrate, wherein
the stack includes catalyst layers and gap layers, and each catalyst layer and each gap layer are alternately stacked,
one of the gap layers has a first region and a second region, the first region having a first thickness, the second region having a first gap, and the first gap having a second thickness, and
the second thickness is 3 times or more and 10 times or less the first thickness.

2. The electrode according to claim 1, wherein
the first thickness is 1 nm or more and 50 nm or less.

3. The electrode according to claim 1 or claim 2, wherein
a width of the first gap is 1/500 times or more and 1/10 times or less a width of the first region.

4. The electrode according to any one of claim 1 to claim 3, wherein
the stack further includes a second gap penetrating at least two of the catalyst layers in order from the surface of the stack and communicating with the first gap.

5. The electrode according to claim 4, wherein
a thickness of the second gap is equal to or more than 1/3 of a thickness of the stack and equal to or less than the thickness of the stack.

6. The electrode according to claim 4 or claim 5, wherein
a width of the second gap is 25 nm or more and 900 nm or less.

7. The electrode according to any one of claim 4 to claim 6, wherein
the surface of the substrate has an uneven surface,
a difference in height of the uneven surface is 10 nm or more and 100 nm or less, and
the second gap is provided on the uneven surface.

8. The electrode according to any one of claim 1 to claim 7, wherein each catalyst layer contains at least one metal selected from the group consisting of platinum, palladium, iridium, ruthenium, rhodium, osmium, gold, and tantalum.

9. The electrode according to any one of claim 1 to claim 7, wherein each catalyst layer contains iridium.

10. The electrode according to any one of claim 1 to claim 9, wherein each catalyst layer is porous.

11. The electrode according to any one of claim 1 to claim 10, wherein the stack has a first average thickness of 10 nm or more and 900 nm or less.

12. The electrode according to any one of claim 1 to claim 11, wherein each gap layer has a second average thickness of 1 nm or more and 100 nm or less.

13. The electrode according to any one of claim 1 to claim 12, wherein the second gap includes a crack.

14. A membrane electrode assembly comprising:
a first electrode including the electrode according to any one of claim 1 to claim 13;
a second electrode; and
an electrolyte membrane provided between the first electrode and the second electrode.

15. An electrochemical reaction device comprising the membrane electrode assembly according to claim 14.
